## Europäisches Patentamt

## European Patent Office

## Office européen des brevets

(11) Veröffentlichungsnummer: **0 123 271**
**B1**

(12) # EUROPÄISCHE PATENTSCHRIFT

(45) Veröffentlichungstag der Patentschrift:
02.09.87

(51) Int. Cl.⁴: **G 03 B 37/00**

(21) Anmeldenummer: **84104399.5**

(22) Anmeldetag: **18.04.84**

(54) **Verfahren und Einrichtung zum Ausgleich der Bildwanderung bei einer Luftbildkamera.**

(30) Priorität: **20.04.83 DE 3314227**

(43) Veröffentlichungstag der Anmeldung:
**31.10.84 Patentblatt 84/44**

(45) Bekanntmachung des Hinweises auf die Patenterteilung:
**02.09.87 Patentblatt 87/36**

(84) Benannte Vertragsstaaten:
**CH DE FR GB LI**

(56) Entgegenhaltungen:
**DE-A-1 772 046**
**DE-A-2 736 611**
**US-A-3 163 098**
**US-A-3 240 138**
**US-A-3 435 743**

(73) Patentinhaber: **Firma Carl Zeiss, D-7920 Heidenheim (Brenz) (DE)**
(84) Benannte Vertragsstaaten: **CH DE FR LI**

(73) Patentinhaber: **CARL- ZEISS- STIFTUNG trading as CARL ZEISS, D-7920 Heidenheim (Brenz) (DE)**
(84) Benannte Vertragsstaaten: **GB**

(72) Erfinder: **Prinz, Reinhard, Weisse Steige 25, D-7080 Aalen (DE)**

## Beschreibung

Die Erfindung betrifft ein Verfanren sowie eine Einrichtung zum Ausgleich der Bildwanderung bei einer Luftbildkamera, in der ein Schlitzverschluß senkrecht zu dem parallel zur Flugrichtung transportierten Film abläuft.

Einrichtungen zum Ausgleich der Bildwanderung, abgekürzt meist als "FMC" (forward motion compensation) oder "IMC" (image motion compensation) bezeichnet, sind in Luftbildkameras nahezu jeden Typs vorhanden. Sie kompensieren die durch die Gleichung:

$$V_B = \frac{V_F \cdot f}{h} \tag{1}$$

beschriebene Wanderungsgeschwindigkeit $V_B$ des Bildes des aufgenommenen Objekts in der Filmebene durch eine Relativbewegung zwischen Objektiv und Film. In dieser Gleichung bedeuten:

$V_F$ = Fluggeschwindigkeit
$f$ = Brennweite der Kamera
$h$ = Flughöne.

Die Bildwanderungsgeschwindigkeit $V_B$ ist allerdings nur dann über das gesamte Bildfeld konstant, wenn die optische Achse des Aufnahmeobjektivs senkrecht auf dem überflogenen Gelände steht. Ist diese Voraussetzung nicht erfüllt, beispielsweise weil das Flugzeug während der Belichtung um einen Rollwinkel $\omega$ aus seiner horizontalen Lage heraus gekippt ist oder weil die Kamera von vornherein in der zur Flugrichtung senkrechten Ebene unter einem Winkel $\beta$ gegen die Vertikale geschwenkt ist, dann ändert sich die Bildwanderungsgeschwindigkeit $V_B$ innerhalb des Bildfeldes abhängig vom Bildwinkel $\alpha$.

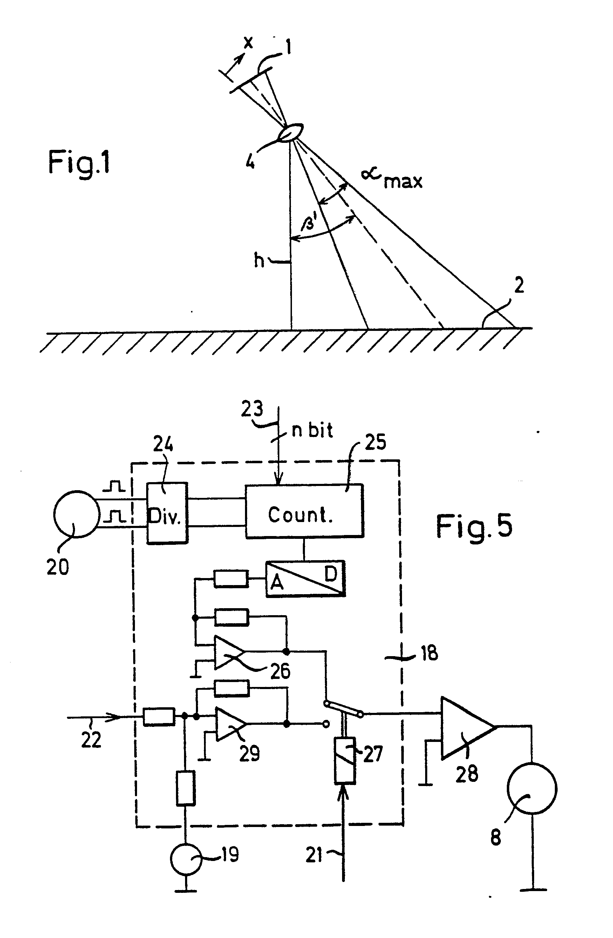

Dies läßt sich qualitativ anhand der Darstellung in Fig. 1 erkennen: Bei einer Verkippung der Achse des Objektivs 4 einer Flugzeug in einem mit Flugrichtung $V_F$ senkrecht zur Papierebene angeordneten Luftbildaufnahmekamera gegen die Vertikale sind die Objektebene 2 und die Bildebene 1 nicht mehr zueinander parallel und demzufolge sind die Aufnahmeentfernung und der Abbildungsmaßstab abhängig vom jeweiligen Bildwinkel $\alpha$.

Der auch diesen Fall berücksichtigende allgemeine Ausdruck für die Bildwanderungsgeschwindigkeit $V_B$ wird durch die Gleichung:

$$V_B = \frac{V_F \cdot f}{h} \cdot \frac{\cos(\beta' + \alpha)}{\cos\alpha} = \frac{V_F \cdot f}{h}(\cos\beta' - \sin\beta' \tan\alpha) \tag{2}$$

beschrieben, wobei $\beta'$ der momentane Neigungswinkel der Objektivachse gegen die Vertikale senkrecht zur Flugrichtung ist und sich zusammensetzt aus dem voreingestellten Neigungswinkel $\beta$ und dem Rollwinkel $\omega$, d.h. $\beta'$ ist die Winkelsumme $\omega + \beta$.

Es ist klar, daß Bewegungsunschärfen im Bild auftreten können, wenn der Einfluß der zusätzlichen Parameter $\beta'$ und $\alpha$ bei der Auslegung einer Einrichtung zum Bildwanderungsausgleich (FMC) nicht berücksichtigt wird.

Bei sogenannten Panoramakameras ist es bekannt, die FMC-Bewegung nicht nur abhängig von dem Quotienten $V_F/h$ sondern außerdem abhängig vom Schwenkwinkel $\gamma$ eines vor dem Objektiv der Kamera angeordneten, das Gelände zyklisch abscannenden Prismas zu steuern.

FMC-Systeme für Panoramakameras sind beispielsweise im Manual of Photogrammetrie, 3. Auflage (1966), S. 145-156 sowie in der DE-OS-17 72 429 beschrieben. In solchen Kameras läuft der Film in der Bildebene jedoch nicht parallel zur Flugrichtung sondern quer zur Flugrichtung. Demzufolge muß zum Ausgleich der Bildwanderung das Objektiv selbst senkrecht zu seiner Achse bewegt werden, was eine präzise Führung dieses mit relativ großer Masse behafteten Kamerateils erforderlich macht. Panoramakameras sind außerdem nicht ohne weiteres mit konventionellen Aufnahmekameras zu vergleichen, da dort abbildungsseitig immer mit dem Bildwinkel $\alpha = 0$ gearbeitet wird, so daß der Term $\sin\beta' \cdot \tan\alpha$ in Gleichung (2) keine Rolle spielt.

Panoramakameras besitzen im übrigen generell den Nachteil, daß für eine stereoskopische Auswertung das Filmband zerschnitten werden muß, was bei Aufklärungskameras einen erheblichen Zeitverlust bedeutet. Außerdem wird die Auswertung durch den Umstand erschwert, daß wegen des dort verwendeten rotierenden Prismas keine geradentreue Abbildung des Objekts entsteht.

In Flugrichtung läuft der Film beispielsweise bei den unter dem Namen Streifenkamera (engl. continous strip camera, Sonne camera) bekannten Luftbildaufnahmesystemen ab. Dort wird die Filmtransportgeschwindigkeit auf einem $V_F/h$ proportionalen Wert gehalten, während der Film in einem sich quer zur Flugrichtung erstreckenden, schmalen, streifenförmigen Bereich permanent belichtet wird. Solche, beispielsweise in den US-PS'en 24 13 349 und 31 63 098 beschriebenen Kamerasysteme sind jedoch nur für vertikale Beobachtungen geeignet. Das Problem einer schwenkwinkelabhängigen Anpassung der Filmgeschwindigkeit an die Bildwanderung tritt deswegen hier nicht auf.

Streifenkameras liefern im übrigen überhaupt kein stereoskopisch auswertbares Bild, da keine Überdeckung vorhanden ist. Durch Rollbewegungen des Flugzeugs entstenen außerdem sehr starke Bildverzerrungen quer zur Filmtransportricntung.

In der GB-PS-885 690 ist ein Luftbildaufnahmesystem mit schwenkbaren bzw. gegen die Vertikale geschwenkten Kameras mit Zentralverschluß beschrieben. Der Bildwanderungsausgleich ist so gelöst, daß die gesamte Kamera während der Belichtung entsprechend einem Signal bewegt wird, das proportional zu $\cos\beta' \cdot V_F/h$ ist. Eine Feinkorrektur des FMC abhängig vom Bildwinkel $\alpha$ findet für diese Kameras allerdings nicht statt.

**0 123 271**

Des weiteren ist unter dem Namen KRb6/24 eine von Carl Zeiss, Oberkochen, Bundesrepublik Deutschland, hergestellte Kamera bekannt, die einen permanent senkrecht zu dem in Flugrichtung transportierten Film ablaufenden Schlitzverschluß besitzt. Zum Ausgleich der Bildwanderung wird in dieser Kamera die Filmtransportgeschwindigkeit abhängig vom Verhältnis von Fluggeschwindigkeit V zur Höhe h und der Brennweite f der Kamera gesteuert. Außerdem wird dem Filmantrieb über ein zwischen der Antriebswalze des Films und dem proportional zu V/h drehenden Antriebsmotor angeordnetes Differentialgetriebe eine bildwinkelabhängige Korrekturbewegung überlagert. Diese Korrekturbewegung ist mit Hilfe eines Hebelgetriebes an den voreingestellten Schwenkwinkel β in ihrer Amplitude einstellbar und wird von einem mit dem Verschlußantrieb gekoppelten Exzenter erzeugt, der eine dem Geschwindigkeitsprofil der Bildwanderung während der Belichtung angenäherte Bewegung ausführt.

Der Nachteil des letztgenannten Verfahrens zum Ausgleich der Bildwanderung ist einmal in dem erheblichen Aufwand der benötigten mechanischen Präzisionsteile wie Differentialgetriebe, Hebelgetriebe, Exzenter etc. zu sehen. Die beschriebene mechanische Feinkorrektur des Bildwanderungsausgleichs befriedigt außerdem nicht, da infolge von Getriebelosen und Torsionen der Übertragungswellen Fehler auftreten. Eine weitere Fehlerquelle ist in der mangelnden Geschwindigkeitskonstanz des umlaufenden Verschlusses zu sehen, die sich deshalb auf den Bildwanderungsausgleich auswirkt, weil die Korrekturbewegung von dem Exzenter von der Verschlußgeschwindigkeit abgeleitet wird.

Außerdem ist man durch den Exzenter auf ein einziges Geschwindigkeitsprofil festgelegt, das auf das verwendete Objektiv abgestimmt ist. Ein Wechsel der Objektivkonfiguration, z. B. einer Einzellinse gegen eine sogenannte Multilens-Anordnung bestehend aus mehreren, dem gleichen Verschluß zugeordneten Linsen unterschiedlicher Achsneigung, erfördert jedoch die Bereitstellung eines völlig anderen Geschwindigkeitsprofils. Das verwendete Hebelgetriebe erlaubt nur das Voreingeben eines konstanten Schwenkwinkels β. Eine Berücksichtigung des dauernd variierenden Rollwinkels ω des Flugzeugs ist bei diesem bekannten mechanischen Korrekturgetriebe nicht ohne weiteres möglich.

Schließlich lassen sich mit einem permanent umlaufenden Verschluß keine stufenlos regelbare Bildfolgefrequenzen realisieren. Letzteres ist nur mit einem im Start-Stop-Betrieb arbeitenden Verschluß möglich.

Es ist die Aufgabe der vorliegenden Erfindung ein verbessertes Verfahren zum Ausgleich der Bildwanderung für eine Luftbildkamera anzugeben, in der ein Schlitzverschluß senkrecht zu dem parallel zur Flugrichtung transportierten Film abläuft. Das Verfahren sollte einen bildwinkelabhängigen Ausgleich in Verbindung mit einem im Start-Stop-Betrieb arbeitenden Schlitzverschluß ermöglichen.

Gelöst wird diese Aufgabe gemäß dem Kennzeichen des Anspruches 1 dadurch, daß die Position des Schlitzes während des Belichtungsvorganges permanent gemessen wird und der Antriebsmotor des Filmtransports von einem von der Position des Schlitzes abgeleiteten Regelsignal beaufschlagt wird.

Dabei ist es vorteilhaft, daß in der Zeit zwischen zwei Belichtungsvorgängen aus einer der verwendeten Objektivkonfiguration zugeordneten Funktion und den Werten für V/h,f und β' ein Geschwindigkeitsprofil in Abhängigkeit von der Sollposition des Schlitzes errechnet wird, mit dem das während der anschließenden Belichtung gewonnene, der Schlitzposition proportionale Signal gefaltet wird.

Hauptbestandteil dieser Recheneinheit kann beispielsweise ein Mikroprozessor sein.

Bei der erfindungsgemäßen Lösung sind der Verschlußantrieb und der Filmantrieb mechanisch voneinander entkoppelt. Die trägen Massen des Filmantriebs beeinflussen die Bewegung des Verschlußes daher nicht.

Schließlich kann die Genauigkeit des Bildwanderungsausgleichs durch permanente Berücksichtigung der Rollwinkellage des Flugzeugs verbessert werden.

Die Einrichtung zur Durchführung des erfindungsgemäßen Verfahrens ist durch eine Recheneinheit gekennzeichnet, die mit Datenleitungen zur Eingabe der aktuellen Werte für V/h, β' und f sowie dem Ausgang eines mit dem Schlitzverschluß gekoppelten Stellungsgebers verbunden ist, dessen Signal zur Feinkorrektur der Filmtransportbewegung abhängig von der momentanen Schlitzposition dient.

In der Recheneinheit sind vorzugsweise mehrere Grundfunktionen gespeichert, nach denen die Schlitzposition in die zugehörige Filmtransportgeschwindigkeit umgerechnet wird und die Recheneinheit ist mit einem Codegeber zur Eingabe der verwendeten Objektivkonfiguration der Kamera verbunden.

Durch diese Maßnahme wird eine Anpassung des für den Bildwanderungsausgleich nötigen Geschwindigkeitsprofils an die gerade verwendete Objektivkonfiguration erzielt, ohne daß Eingriffe in den Antriebsteil der Kamera erforderlich wören. Der Codegeber ist zweckmäßig an der Aufnahme des Objektivs angebracht, wodurch eine selbsttätige Umschaltung beim Objektivwechsel ermöglicht wird.

Die Breite des Schlitzes des Kameraverschlußes ist zur Anpassung an die Lichtverhältnisse bei der Aufnahme in der Regel variabel. Damit der Bildwanderungsausgleich nicht durch Änderungen der Schlitzbreite verfälscht wird, ist es zweckmäßig, wenn die Breite des Schlitzes durch eine Belichtungsautomatik gesteuert wird, die mit der Recheneinheit gekoppelt ist und die Bildung des Regelsignals für den Filmtransprt auf die Schlitzmittenposition bezogen erfolgt.

Somit ist es nicht erforderlich, den Stellungsgeber so anzubringen, daß er von vornherein ein der Schlitzmittenposition proportionales Signal abgibt. Der Stellungsgeber kann vielmehr direkt mit einem der beiden Vorhänge des Verschlußes gekoppelt sein und demzufolge ein der Position der Schlitzkante proportionales Signal abgeben, das in der Recheneinheit entsprechend dem von der Belichtungsautomatik übermittelten Signal korrigiert wird.

Es ist klar, daß der Filmantrieb neben der Ausgleichsbewegung zur Kompensation der Bildwanderung

3

**0 123 271**

außerdem zwischen den Belichtungsvorgängen den Filmvorschub bewerkstelligt, wenn hohe Bildfolgefrequenzen erzielt werden sollen, muß der Filmvorschub möglichst rasch erfolgen. Der Film ist daher einen permanenten Wechsel von Beschleunigungs- und Abbremskräften unterworfen, wobei der Bildwanderungsausgleich außerdem eine möglichst genaue Einhaltung der Filmgeschwindigkeit innerhalb des Zyklus erforderlich macht. Daher ist es zweckmäßig, wenn zwischen dem Antrieb des Filmtransports in der Bildebene und den motorgetriebenen Filmspulen ein in Transportrichtung verschiebbarer, aus zwei miteinander verbundenen Umlenkrollen bestehender Pufferspeicher angeordnet ist, damit die vom Filmantrieb zu bewegenden Trägheitsmomente möglichst gering gehalten werden können. Der Pufferspeicher kann beispielsweise den in der DE-PS-27 36 611 beschriebenen Aufbau besitzen.

Weitere vorteilhafte Ausgestaltungen der Erfindung sind in den Unteransprüchen zu finden und werden anhand der nachfolgenden Beschreibung der Figuren der beigefügten Zeichnungen erläutert:

Fig. 1 skizziert die Abbildungsverhältnisse bei einem Bildflug;

Fig. 2 u. Fig. 3 sind Prinzipskizzen zur Verdeutlichung der Bildwanderung bei 3 einer Multilens-Anordnung als Kameraobjektiv;

Fig. 4 ist eine Prinzipskizze eines Ausführungsbeispiels der Erfindung;

Fig. 5 ist ein detaillierteres Blockschaltbild des Reglers 18 aus Fig. 4;

Fig. 6 u. Fig. 7 sind Prinzipskizzen zur Verdeutlichung der Bildwanderung bei einer gekippten Kamera mit Einzelobjektiv;

Fig. 8 ist ein Diagramm, das die Bildwanderungsgeschwindigkeit $V_B$ in Abhängigkeit von der Verschlußposition x für die Anordnungen nach Fig. 2/3 und Fig. 6/7 zeigt.

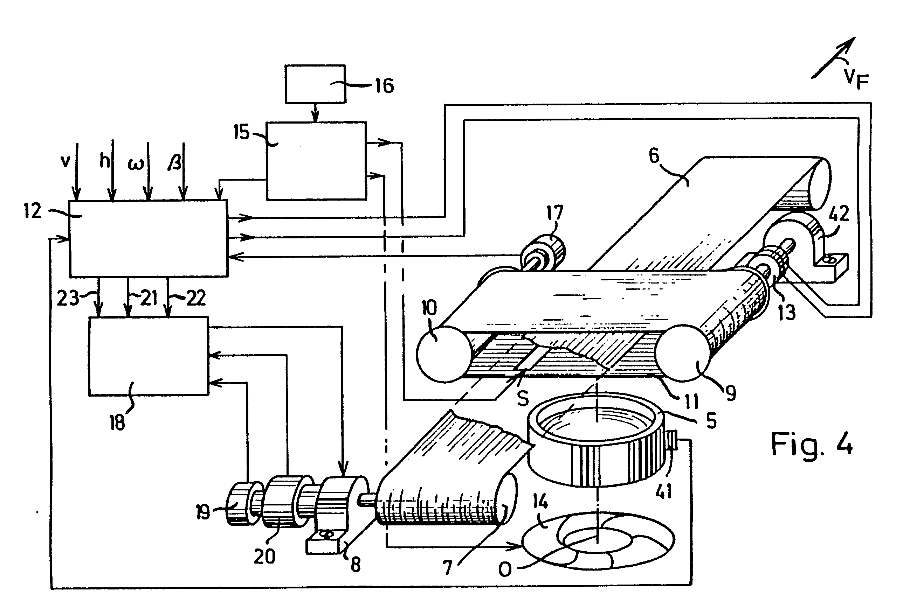

Die Fig. 1 wurde bereits einleitend zur Verdeutlichung der die Bildwanderungsgeschwindigkeit $V_B$ beeinflußenden Parameter diskutiert. Es soll daher gleich mit der Beschreibung der Fig. 4 begonnen werden, in der ein Ausführungsbeispiel der Erfindung dargestellt ist.

In Fig. 4 ist mit 5 das Aufnahmeobjektiv einer Luftbildkamera bezeichnet, die so in ein Flugzeug eingebaut ist, daß die Transportrichtung des hinter dem Objektiv 5 angeordneten Films 6 mit der durch den Pfeil $V_F$ angedeuteten Flugrichtung übereinstimmt. Der Antrieb des Films 6 in der Bildebene erfolgt durch eine Transportrolle 7, die von einem Motor 8 bewegt wird.

Zwischen dem Objektiv 5 und dem Film 6 ist ein Schlitzverschluß angeordnet. Dieser Verschluß ist vereinfacht als ein über Rallen 9 und 10 gelegtes Band 11 dargestellt, in dem ein Schlitz s konstanter Breite ausgeschnitten ist. Tatsächlich besteht der Verschluß aus zwei Vorhängen, wobei dann die Schlitzbreite regelbar ist. Auf den detaillierten Aufbau derartiger Verschlüsse braucht an dieser Stelle nicht näher eingegangen zu werden.

Gesteuert wird die Schlitzbreite $\Delta S$ und damit die Belichtungszeit ebenso wie die Öffnung einer vor dem Objektiv 5 angeordneten Blende 14 von einer Belichtungsautomatik 15 entsprechend dem Signal eines lichtempfindlichen Sensors 16. Der Schlitzverschluß 11 wird von einer Steuereinheit 12 betätigt, die entsprechend der vorgewählten Überdeckung unter Berücksichtigung der Fluggeschwindigkeit $V_F$ und der Flughöhe h die Bildfolgefrequenz steuert und die Antriebsrolle 9 über eine Kupplung 13 zyklisch mit einem mit konstanter Geschwindigkeit drehenden Motor 42 verbindet und nach erfolgter Belichtung wieder trennt und abbremst. Die Steuereinheit 12 enthält außerdem einen Rechner, der aus dem bereits für die Überdeckungsregelung verwendeten Signal für das Verhältnis $V_F/h$ einem dem Rollwinkel $\omega$ des Flugzeugs proportionalen Signal und der voreingestellten Neigung $\beta$ der Kamera gemäß Gleichung (2) die Bildwanderungsgeschwindigkeit $V_B$ berechnet. In diese Berechnung geht außerdem der momentane Bildwinkel $\alpha$ im Moment der Belichtung ein. Dazu ist die Rolle 10 mit einem Stellungsgeber 17 gekoppelt, der ein Signal liefert, welches proportional der Stellung x des Schlitzes S ist. Zwischen dem Bildwinkel und der Schlitzposition x besteht die Beziehung tan $\alpha = \frac{x}{f}$.

Zur Regelung der Filmtransportgeschwindigkeit auf den von der Recheneinheit 12 ermittelten Sollwert gemäß Gleichung (2) ist ein Hybrid-Regler 18 vorgesehen, der den auf der Leitung 22 liegenden Sollwert mit dem Ausgangssignal eines mit der Filmtransportrolle 7 gekoppelten Tachogenerators 19 vergleicht und das aus dem Soll-Istwertvergleich gewonnene Regelsignal dem Motor B des Filmantriebs zuführt.

Der Hybrid-Regler 18 regelt außerdem den Filmvorschub zwischen den Belichtungsvorgängen. Hierzu ist ein Stellungsgeber 20 auf der Achse der Filmtranspartrolle 7 angebracht. Das Signal dieses Stellungsgebers 20 vergleicht der Hybrid-Regler 18 mit einem auf der Leitung 23 liegenden Sollwert, welcher dem Bildformat des benutzten Objektivs proportional ist. Das auf der Leitung 23 liegende Signal wird von einem Codegeber 41 an der Aufnahme des Objektivs 5 generiert und über den Rechner 12 dem Hybridregler 18 zugeführt.

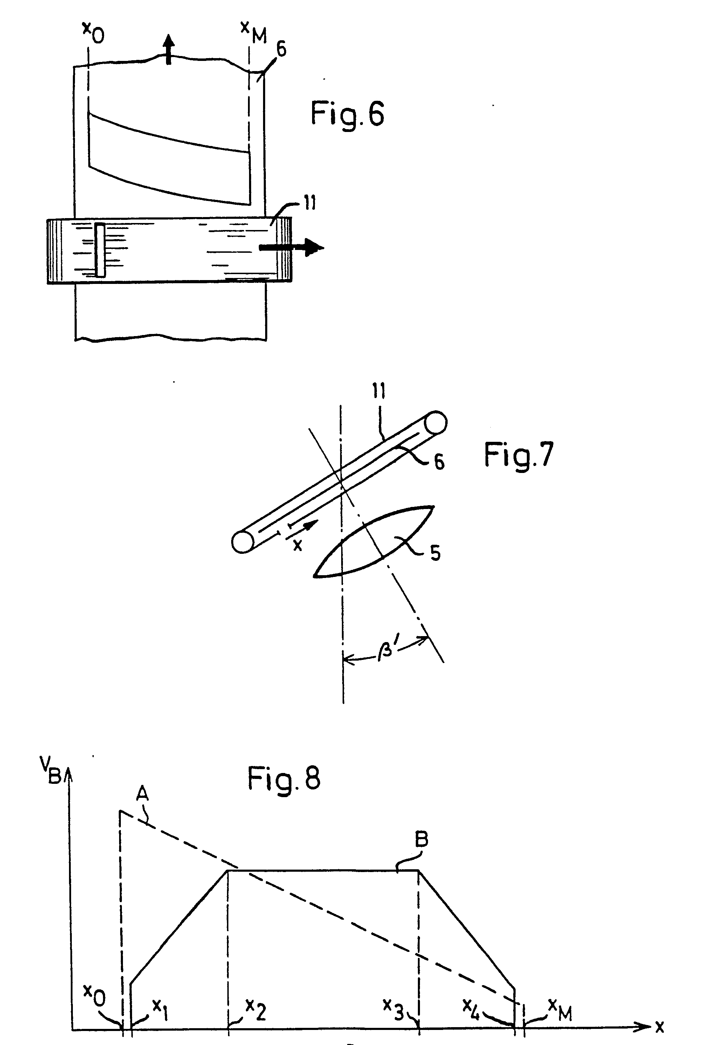

In Fig. 5 ist der Hybrid-Regler 18 detailliert dargestellt. Er enthält einen Richtungsdiskriminator 24, in dem die Drehrichtung des Stellungsgebers 20 erkannt wird, und darauffolgend einen Zähler 25 zur Addition/Substration der Impulse des inkrementalen Stellungsgebers 20. An den Zähler 25 ist ein Digital/Analog-Wandler angeschlossen. Er liefert ein der Stellung der Transportrolle 7 proportionales, analoges Ausgangssignal, welches im Regelverstärker 26 verstärkt und über einen Umschalter 27 dem Leistungsverstärker 28 des Motors 8 zugeführt wird. Wenn die dem Bildformat entsprechende Bildseitenlänge, welche digital über einen Zählersetzeingang 23 geladen wurde, vom Stellungsgeber 20 als weitertransportiert gemeldet worden ist, kommt der Motor 8 zum Stillstand.

Über den Schalter 27 kann ein zweiter Operationsverstärker 29 mit dem Leistungverstärker 28 verbunden werden. Dieser Operationsverstärker 29 führt den Soll-Istwertvergleich zwischen dem Signal auf Leitung 22 und dem Tachogenerator 19 durch. Die Umschaltung erfolgt durch den Rechner 12 gesteuert über ein mit der

4

Bildfolgefrequenz synchronisiertes Signal auf der Leitung 21.

Ist die Achse der Kamera aus Fig. 4 um den Winkel $\beta'$ gegen die Vertikale geneigt, wie dies in Fig. 7 skizziert ist, beispielsweise aufgrund einer Rollbewegung des die Kamera tragenden Flugzeugs, dann ist die Bildwanderungsgeschwindigkeit in der Ebene des Films 6 gemäß Gleichung (2) gegeben zu

$$V_B = \frac{V_F \cdot f}{h} \cos \beta' - \frac{V_F}{h} \sin \beta' \cdot x \qquad (3)$$

wenn man von der Beziehung $x = f \cdot \tan \alpha$ Gebrauch macht. Dabei steht für die Schlitzposition. Unter der Voraussetzung, daß sich $V_F$, h und $\beta'$ während der Belichtung nicht ändern, ist $V_B$ nur vom Bildwinkel abhängig und besitzt den durch den Graphen A in Fig. 8 skizzierten Verlauf.

Beim Bildwanderungsausgleich wird der Film 6 vom Motor 8 also mit einer Geschwindigkeit $V_T(x) = V_B$ abhängig von der durch den Encoder 17 gemessenen Schlitzposition gemäß Gleichung (3) bewegt. Die normalerweise rechteckige Bildmaske wird zwar mit ihren quer zur Flugrichtung verlaufenden Begrenzungslinien parabelförmig auf dem Film 6 abgebildet und besitzt daher die in Fig. 6 übertrieben dargestellte, verzerrte Form, der Bildinhalt selbst ist jedoch frei von Bewegungsunschärfen und Verzerrungen, da ja wegen des bildwinkelabhängigen Bildwanderungsausgleichs keine Relativbewegung zwischen Bild und Film entsteht.

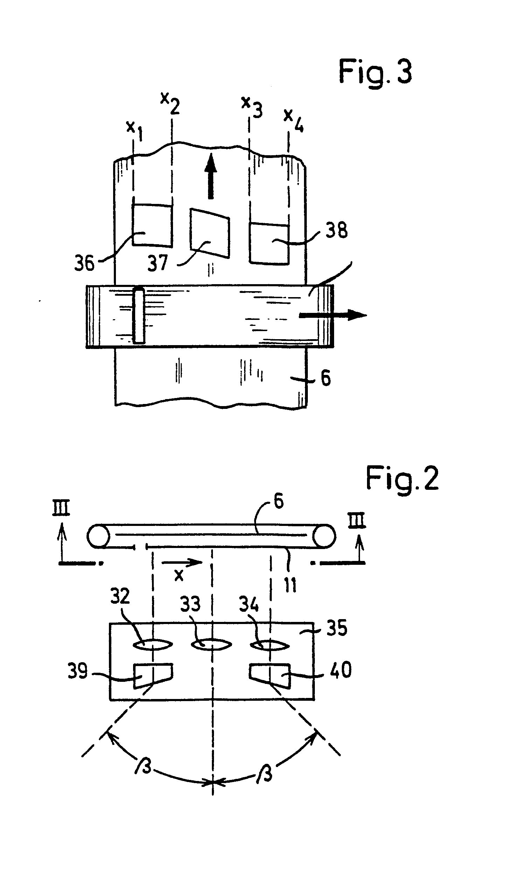

Das Einzelobjektiv 5 kann gegen das in Fig. 2 skizzierte Mehrlinsenobjektiv 35 ausgewechselt werden. Das Objektiv 35 enthält in einer Linie senkrecht zur Flugrichtung nebeneinander angeordnet drei Einzelobjektive 32, 33, 34, wobei die optischen Achsen der beiden äußeren Objektive 32 und 34 durch davorgesetzte Prismen 39 und 40 gegen die Vertikale geneigt sind. Durch einen Vergleich mit Gleichung (3) wird klar, daß in den den Einzelobjektiven 32, 33 und 34 zugeordneten, in Fig. 3 dargestellten Bildfeldern 36, 37 und 38 unterschiedliche Bildwanderungsgeschwindigkeiten vorliegen, denn die beiden äußeren Objektive 32 und 34 besitzen entgegengesetzte Neigungswinkel $\beta$, zu denen sich außerdem Rollbewegungen unterschiedlich addieren. Die Blickrichtung des mittleren Objektiv 33 dagegen ist parallel zur Vertikalen, so daß im dazugehörigen Bildfeld 37 die Bildwanderungsgeschwindigkeit für den Fall $\omega = o$ konstant ist.

Das der Objektivanordnung 35 zugehörige Geschwindigkeitsprofil der Bildwanderung-entspricht dem Graphen B in Fig. 8. Dieser Graph B wird durch die Lage der Bildgrenzen $x_1$, $x_2$, $x_3$ und $x_4$, die Höhe des Abschnitts zwischen $x_2$ und $x_3$ und die Steigung der Abschnitte zwischen den Punkten $x_1$ und $x_2$ bzw. $x_3$ und $x_4$ beschrieben. Während-$x_1$-$x_4$ objektiveigene Konstanten sind, hängen die Steigung und die Amplitude des Profils B gemäß Gleichung (3) von $V_F$, h, $\omega$ und $\beta$ ab. Im Rechner 12 der Einrichtung nach Fig. 4 sind die den Graphen A und B entsprechenden Grundfunktionen abgespeichert und werden bei einem Objektivwechsel durch das Signal des Codeleser 41 aufgerufen. Anschließend wird das Geschwindig-Bildflug permanent gemessenen Werte für V/h und $\omega$ für jeden Belichtungsvorgang in der Zeit zwischen zwei Belichtungsvorgängen neu berechnet. Nach diesem Geschwindigkeitsprofil wird der Filmantrieb 7, 8 dann abhängig von der momentanen Istposition des Schlitzes S während der Belichtung mit der Geschwindigkeit $V_T = V_B$ gesteuert.

**Patentansprüche**

1. Verfahren zum Ausgleich der Bildwanderung bei einer Luftbildkamera, in der ein Schlitzverschluß (11) senkrecht zu dem parallel zur Flugrichtung transportierten Film (6) abläuft und die Filmtransportgeschwindigkeit $V_T$ in der Bildebene in Flugrichtung abhängig vom Verhältnis von Fluggeschwindigkeit $V_F$ zu Höhe h, der Brennweite f des Aufnahmeobjektivs und vom voreingestellten Neigungswinkel $\beta$ zwischen der Objektivachse und der Vertikalen gesteuert wird, dadurch gekennzeichnet, daß die Position (x) des Schlitzes (s) während des Belichtungsvorganges permanent gemessen wird und der Antriebsmotor (8) für die Filmtransportrolle (7) mit einem Regelsignal beaufschlagt wird, welches ausser von den genannten Grössen auch von der Position (x) des Schlitzes (s) abhängt.

2. Verfahren nach Anspruch 7, dadurch gekennzeichnet, daß in der Zeit zwischen zwei Belichtungsvorgängen aus einer der verwendeten Objektivkonfiguration (5, 35) zugeordneten Funktion und den Werten für $V_F$/h, f und dem momentanen Neigungswinkel $\beta'$ der Objektivachse gegen die Vertikale ein Geschwindigkeitsprofil in Abhängigkeit von der Sollposition (x) des Schlitzes (s) errechnet wird und mit dem während der anschließenden Belichtung gewonnenen, der Schlitzposition proportionalen Signal gefaltet wird.

3. Einrichtung zur Durchführung des Verfahrens nach Anspruch 1 oder 2, gekennzeichnet durch eine Recheneinheit (12) zur Steuerung der Filmtransportgeschwindigkeit $V_T$ die mit Datenleitungen zur Eingabe der aktuellen Werte für $V_F$/h, $\beta'$ und f sowie dem Ausgang eines mit dem Schlitzverschluß (11) gekoppelten Stellungsgebers (17) verbunden ist, dessen Signal zur Feinkorrektur der Filmtransportbewegung abhängig von der momentanen Schlitzposition (x) dient.

4. Einrichtung nach Anspruch 3, dadurch gekennzeichnet, daß in der Recheneinheit (12) mehrere Grundfunktionen gespeichert sind, nach denen die Schlitzposition (x) in die zugehörige Filmtransportgeschwindigkeit $V_T$ umgerechnet wird und die Recheneinheit (12) mit einem Codegeber (41) zur Eingabe der verwendeten Objektivkonfiguration (5, 35) verbunden ist.

5. Einrichtung nach Anspruch 4, dadurch gekennzeichnet, daß der Codegeber (41) an der Aufnahme des Objektivs (5) angeordnet ist.

6. Einrichtung nach Anspruch 3-5, dadurch gekennzeichnet, daß die Breite des Schlitzes (s) durch eine Belichtungsautomatik (15) gesteuert wird, die mit der Recheneinheit (12) gekoppelt ist und die Bildung des Regelsignals für den Filmtransport auf die Schlitzmittenposition bezogen erfolgt.

7. Einrichtung nach Anspruch 3-6, dadurch gekennzeichnet, daß der Schlitzverschluß über eine von der Recheneinheit (12) gesteuerte Kupplung (13) mit einem bei konstanter Drehzahl laufenden Motor (42) verbunden ist.

8. Einrichtung nach Anspruch 3-7, dadurch gekennzeichnet, daß der Filmtransport (7) mit einem Stellungsgeber (20) und einem Tachogenerator (19) gekoppelt ist und ein Hybridregler (18) vorgesehen ist, der von der Recheneinheit (12) gesteuert zwischen den Belichtungsvorgängen eine Positionsregelung und während der Belichtung eine Geschwindigkeitsregelung des Filmtransports (7) vornimmt.

9. Einrichtung nach Anspruch 1-7, dadurch gekennzeichnet, daß zwischen dem Antrieb des Filmtransports (7) in der Bildebene und den motorbetriebenen Filmspulen ein in Transportrichtung verschiebbarer, aus zwei miteinander verbundenen Umlenkrollen bestehender Pufferspeicher angeordnet ist.

## Claims

1. A method of compensating for image motion in an aerial camera in which a slotted shutter (11) moves transverse to the direction of film (6) transport and in which film transport is parallel to the direction of flight, and further in which film-transport speed $V_T$ in the image plane and in the direction of flight is controlled as a function of the ratio of the speed of flight $V_F$ to the altitude h, the focal length f of the camera lens, and the preset inclination angle β of the camera, characterized by the fact the position (x) of the slot (S) is continuously measured during an exposure angle, and the drive motor (8) for film transport wheel (7) is governed by a control signal which depends on values named above and on the measured position (x) of the slot (S).

2. A method according to claim 1, characterized by the fact that during the time between two successive exposure cycles a speed profile is computed dependend on the theoretical positions (x) of the slot (S), the computation being pursuant to a function associated with the involved lens configuration (5, 35) and with the values of $V_F/h$, f and the instantaneous inclination angle β', and that the speed profile is folded with a signal which is proportional to the position (x) of the slot (S) measured during the subsequent exposure.

3. A device for carrying out the method of claim 2, characterized by a computing unit (12) for controlling filmtransport speed $V_T$, which unit is connected with data lines for inputting the instantaneous values for $V_F/h$, β 'and f and with the output of a position indicator (17) which is coupled to the slotted shutter (11), the signal from said position indicator serving for the fine correction of the film-transport movement as a function of the instantaneous position (x) of the slot.

4. A device according to claim 3, characterized by the fact that within the computing unit (12) there are stored a plurality of basic functions on the basis of which the position (x) of the slot is converted into the corresponding film-transport speed $V_T$ and that the computing unit (12) is connected to a code transmitter (41) for the inputting of data unique to the lens configuration (5, 35) used.

5. A device according to claim 4, characterized by the fact that the code transmitter (41) is arranged on the mount of the lens (5).

6. A device according to claims 3-5, characterized by the fact that the width of the slot (S) is controlled by an automatic exposure control (15) which is coupled to the computing unit (12) and that the control signal for film transport is effected with reference to the position of the center of the slot.

7. A device according to claims 3-6, characterized by the fact that the slotted shutter is connected to a motor (42) operating at constant speed and via a coupling (13) which is controlled by the computing unit (12).

8. A device according to claims 3-7, characterized by the fact that the film transport (7) is coupled to a position indicator (20) and a tachometer generator (19), and that a hybrid controller (18) is provided which, controlled by the computing unit (12), effects a frame-indexing position control of film advance in the intervals between subsequent cycles and which effects a speed control of film transport (7) during exposure.

9. A device according to claims 1-7, characterized by the fact that a buffer storage which is displaceable in the direction of transport and consists of two guide rollers which are connected to each other is arranged between the drive of the film transport (7) in the image plane and the motor-driven film spools.

## Revendications

1. Procédé pour compenser le filé sur une caméra pour prises de vues aériennes, dans laquelle un objectif à fente (11) avance perpendiculairement au film (6), transporté parallèlement à la direction de vol, et la vitesse de transport du film $V_T$ dans le plan d'image, en direction de vol, est commandée en fonction du rapport de la vitesse de vol $V_F$ à l'altitude h, de la distance focale f de l'objectif de prise de vues et de l'angle préajusté d'inclinaison β entre l'axe de l'objectif et la verticale, caractérisé en ce que l'on mesure en permanence la position (x) de la fente (s) pendant l'exposition et que l'on applique au moteur d'entraînement (8) pour le galet

6

transporteur de film (7) un signal de réglage qui dépend également, en plus des grandeurs mentionnées, de la position (x) de la fente (s).

2. Procédé selon la revendication 1, caractérisé en ce que, pendant le temps entre deux expositions, on calcule, à l'aide d'une fonction coordonnée à la configuration de l'objectif (5, 35) utilisé et des valeurs pour $V_F/h$, pour f et pour l'angle d'inclinaison $\beta'$ instantané de l'axe de l'objectif sur la verticale, un profil de vitesse en fonction de la position de consigne (x) de la fente (s), profil au moyen duquel un signal obtenu pendant l'exposition consécutive et qui est proportionnel à la position de la fente, est soumis à une convolution.

3. Dispositif pour la mise en oeuvre du procédé selon la revendication 1, caractérisé par une unité arithmétique (12) pour commander la vitesse de transport du film $V_T$, unité qui est connectée à des lignes de données servant à l'introduction des valeurs actuelles pour $V_F/h$, $\beta'$ et f, ainsi qu'à la sortie d'un capteur de position (17) couplé à l'obturateur à fente (11) et dont le signal sert à la correction fine du mouvement de transport du film en fonction de la position instantanée (x) de la fente.

4. Dispositif selon la revendication 3, caractérisé en ce que plusieurs fonctions fondamentales sont mémorisées dans l'unité arithmétique (12), à l'aide desquelles est calculée la vitesse de transport de film $V_T$ correspondante d'après la position (x) de la fente, et que l'unité arithmétique (12) est reliée à un générateur de code (41) pour l'introduction de la configuration de l'objectif (5, 35) utilisé.

5. Dispositif selon la revendication 4, caractérisé en ce que le générateur de code (41) est disposé sur le support de l'objectif (5).

6. Dispositif selon les revendications 3-5, caractérisé en ce que la largeur de fente (S) est réglée par un régulateur automatique d'exposition (15) qui est couplé à l'unité arithmétique (12) et que la formation du signal de réglage pour le transport du film s'effectue par rapport à la position médiane de la fente.

7. Dispositif selon les revendications 3-6, caractérisé en ce que l'obturateur à fente est relié à un moteur (42), tournant à vitesse constante, par l'intermédiaire d'un embrayage (13) commandé par l'unité arithmétique (12).

8. Dispositif selon les revendications 3-7, caractérisé en ce que le dispositif (7) transporteur de film est couplé à un capteur de position (20) et à une génératrice tachymétrique (19) et qu'un régulateur hybride (18) est prévu pour effectuer, sous la commande de l'unité arithmétique (12), un réglage de position entre les expositions et un réglage de vitesse du dispositif (7) transporteur de film pendant l'exposition.

9. Dispositif selon les revendications 3-7, caractérisé en ce qu'un accumulateur tampon, composé de deux galets de renvoi reliés entre eux, est disposé entre le dispositif (7) de transport de film dans le plan d'image et les bobines de film entraînées par moteur et est déplaçable en direction de transport du film.

Fig.1

Fig.5

Fig. 3

$x_1$  $x_2$  $x_3$  $x_4$

36  37  38

6

Fig. 2

III  6  III

32  33  34  35

x  11

39  40

β  β

Fig. 4

Fig.6

Fig.7

Fig.8